# EUROPEAN PATENT APPLICATION

(11) **EP 4 841 698 A1**
(43) Date of publication of application: **18.11.2026**
(21) Application number: 25854580.5
(22) Date of filing: 04.08.2025
(51) Int. Cl.: H01M 4/36, H01M 4/525, H01M 4/505, H01M 4/131, H01M 10/052, H01M 4/02

(54) **POSITIVE ELECTRODE ACTIVE MATERIAL, AND POSITIVE ELECTRODE AND LITHIUM SECONDARY BATTERY COMPRISING SAME**

(30) Priority: 13.08.2024 KR 20240108198; 30.07.2025 KR 20250103869
(71) Applicant: LG Energy Solution, Ltd., Seoul 07335 (KR)
(72) Inventor: BAE, Sangho, Daejeon 34122 (KR); KIM, Won Jung, Daejeon 34122 (KR); SUNG, Kiwon, Daejeon 34122 (KR); KIM, Yojin, Daejeon 34122 (KR)
(74) Representative: Hoffmann Eitle
(86) International application number: PCT/KR2025/011573
(87) International publication number: WO 2026/038772

(57) **Abstract**

The present disclosure relates to a positive electrode active material for a lithium secondary battery that can not only exhibit electrical and chemical characteristics peculiar to a manganese-rich positive electrode active material, but also suppress the cracking of particles in the positive electrode and improve the density of the positive electrode, a positive electrode and a lithium secondary battery comprising the same.

## Description

### TECHNICAL FIELD

### Cross Citation with Related Application(s)

This application claims the benefit of priority to Korean Patent Application No. 10-2024-0108198, filed on August 13, 2024, and Korean Patent Application No. 10-2025-0103869, filed on July 30, 2025, the disclosures of which are incorporated herein by reference in their entirety.

The present disclosure relate to a positive electrode active material for a lithium secondary battery that can not only exhibit electrical and chemical characteristics peculiar to a manganese-rich positive electrode active material, but also suppress the cracking of particles in the positive electrode and improve the density of the positive electrode, a positive electrode and a lithium secondary battery comprising the same.

### BACKGROUND

Recently, as the application area of lithium secondary batteries has rapidly been extended not only to supply power for electronic devices such as electricity, electronics, communication, and computers, but also to power storage and supply for large-area devices such as automobiles and power storage systems, demand for secondary batteries that have high capacity, high output and high stability is increasing.

The lithium secondary battery generally consists of a positive electrode containing a positive electrode active material, a negative electrode containing a negative electrode active material, an electrolyte that serves as a medium for transferring lithium ions, and a separator. In this case, carbon-based active materials, silicon-based active materials, and the like can be used as the negative electrode active material. Furthermore, lithium transition metal oxides such as lithium cobalt oxide(LiCoO₂), lithium nickel oxide(LiNiO₂), and lithium nickel-cobalt-manganese composite oxide can be used as the positive electrode active material.

Recently, lithium-rich manganese-rich oxide has been attracting attention as a next-generation positive electrode active material. Lithium-rich manganese-rich oxide has the advantage of achieving high capacity by increasing the content of manganese(Mn), which is relatively inexpensive and abundant in reserves.

However, this lithium-rich manganese-rich oxide has a composition limit that rate characteristics are low. Thus, to improve up this problem, the lithium-rich manganese-rich oxide controls its structure by reducing the size of primary particles and increasing the BET specific surface area of secondary particles.

However, the lithium-rich manganese-rich oxide has a low denseness and a relatively large BET specific surface area when compared to conventional positive electrode active materials, such as lithium nickel-cobalt-manganese composite oxide, and thus has a drawback of being prone to cracking.

In particular, as the lithium-rich manganese-rich oxide particles are easily cracked during the progress of the rolling step in a positive electrode fabrication process, their electrical and chemical characteristics may be deteriorated, the density of the positive electrode may be reduced, and the porosity may be increased, which may reduce the overall energy density of the lithium secondary battery. Further, such low positive electrode density or the like may inevitably increase the thickness of the positive electrode, which may also act as a limit to increasing the energy density of the battery.

### DISCLOSURE OF THE INVENTION

### Technical Problem

It is an object of the present disclosure to provide a positive electrode active material for a lithium secondary battery that can not only exhibit electrical and chemical characteristics peculiar to a manganese-rich positive electrode active material, but also suppress the cracking of particles in the positive electrode and improve the density of the positive electrode.

It is another object of the present disclosure to provide a positive electrode and a lithium secondary battery, comprising the positive electrode active material and thus exhibiting high density and excellent electrical, chemical and mechanical characteristics.

### Technical Solution

According to one embodiment of the present disclosure, provided is a positive electrode active material for a lithium secondary battery, the positive electrode active material comprising: a lithium-rich manganese-rich oxide which includes a layered crystal structure and in which a molar ratio of lithium based on the number of moles of all metals excluding lithium is more than 1 and the content of manganese in all metals excluding lithium is 50 mol% or more,
wherein the positive electrode active material comprises a first positive electrode active material particle and a second positive electrode active material particle each having a different average particle size (D50) and including the lithium-rich manganese-rich oxide, and
wherein when the positive electrode active material is subjected to volume cumulative particle size distribution analysis, it has a bimodal particle size distribution.

In such a positive electrode active material, the lithium-rich manganese-rich oxide, which is a main component of the first and second positive electrode active material particles, may be represented by the following Formula 1:

[Formula 1] Liₐ[Mn_{b}Ni_{c}M_{d}]₂₋ₐO₂

wherein in Formula 1, a is more than 1, b is 0.5 or more and less than 1, c and d are each 0 or more and 0.5 or less, with 0<c+d≤0.5, and M is one or more selected from the group consisting of Co, Fe, Cr, V, Cu, Zn, Ti, Al, Mg, B, W, Ga, In, Ru, Nb, Sn, Sr, and Zr.

According to another embodiment of the present disclosure, provided is a positive electrode for a lithium secondary battery comprising: a positive electrode current collector; and a positive electrode active material layer formed on the positive electrode current collector and including the positive electrode active material of one embodiment.

According to yet another embodiment of the present disclosure, provided is a lithium secondary battery comprising: the positive electrode of another embodiment; a negative electrode; and an electrolyte.

### Advantageous Effects

As a result of experiments by the present inventors, it has been found that by controlling the particle size distribution of manganese-rich positive electrode active material particles and employing positive electrode active materials having different average particle sizes (D50) and a bimodal particle size distribution based on particle size distribution analysis results, the cracking of positive electrode active material particles during rolling may be significantly reduced.

In particular, by applying a positive electrode active material having a bimodal particle size distribution, the contact area with the electrolyte in the positive electrode may be improved, and rate characteristics may be enhanced. Therefore, the BET specific surface area of each positive electrode active material particle may be kept small, and the cracking of positive electrode active material particles may be further reduced

Therefore, by using the manganese-rich positive electrode active material having a bimodal particle size distribution, it is possible to fabricate an excellent positive electrode having high density and low porosity and excellent in rate characteristics without any cracking of particles. Therefore, by using the positive electrode active material of one embodiment, it is possible to provide a next-generation lithium secondary battery that not only exhibits electrical and chemical characteristics such as high capacity characteristics peculiar to manganese-rich positive electrode active materials, but also has thin thickness, high density, and excellent rate characteristics.

### BRIEF DESCRIPTION OF THE DRAWINGS

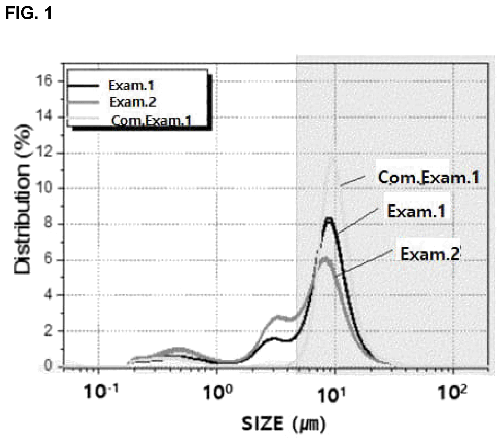

FIG. 1 shows the volume cumulative particle size distribution curves for the positive electrode active materials of Example 1, Example 2 and Comparative Example 1.

### DETAILED DESCRIPTION OF THE EMBODIMENTS

Hereinafter, specific embodiments of the present disclosure will be described in more detail.

As used herein, the term "lithium-rich manganese-rich oxide" or "manganese-rich positive electrode active material" may refer to a lithium metal oxide which includes a layered crystal structure and in which a molar ratio of lithium based on the number of moles of all metals excluding lithium is more than 1 and the content of manganese in all metals excluding lithium is 50 mol% or more,

As used herein, the term "primary particle" refers to a particle unit having no grain boundary in appearance when observed in the view at a magnification of 5,000 to 20,000 using a scanning electron microscope(SEM), and the term "secondary particle" refers to a particle formed by aggregating a plurality of primary particles.

As used herein, the term "average particle size(D50)" refers to a particle size corresponding to 50% of a volume cumulative particle size distribution of a powder to be measured, and may be measured by a laser diffraction method. For example, it can be measured by a process which includes dispersing a positive electrode active material powder in a dispersion medium, introducing it into a commercially available laser diffraction particle size measurement device (e.g., Microtrac S-3500), irradiating it with an ultrasonic wave of about 28 kHz with the output power of 60W to obtain a volume cumulative particle size distribution graph, and determining the particle size corresponding to 50% of cumulative volume.

As used herein, "BET specific surface area" is measured by the BET (Brunauer-Emmett-Teller) method, and specifically, it can be calculated from nitrogen adsorption isotherms obtained under a 77K liquid nitrogen atmosphere using BELSORP-MAX (MicrotracBEL Corp.).

On the other hand, the positive electrode active material according to one embodiment of the present disclosure may include first and second positive electrode active material particles having different average particle sizes (D50), wherein the first and second positive electrode active material particles may each comprise a lithium-rich manganese-rich oxide which includes a layered crystal structure and in which a molar ratio of lithium based on the number of moles of all metals excluding lithium is more than 1 and the content of manganese in all metals excluding lithium is 50 mol% or more,

In a specific embodiment, the lithium-rich manganese-rich oxide, which is the main component of the first and second positive electrode active material particles, may be a compound represented by the following Formula 1:

[Formula 1] Liₐ[Mn_{b}Ni_{c}M_{d}]₂₋ₐO₂

wherein in Formula 1, a is more than 1, b is 0.5 or more and less than 1, c and d are each 0 or more and 0.5 or less, with 0<c+d≤0.5, and M is one or more selected from the group consisting of Co, Fe, Cr, V, Cu, Zn, Ti, Al, Mg, B, W, Ga, In, Ru, Nb, Sn, Sr and Zr.

The positive electrode active material of one embodiment, including these first and second positive electrode active material particles, may each have a form of secondary particles in which a plurality of primary particles are aggregated. When the positive electrode active material of one embodiment is subjected to overall volume cumulative particle size distribution analysis, it may exhibit a bimodal particle size distribution including multiple peaks, for example, two peaks that are separated from each other. In this case, the bimodal particle size distribution may be defined and confirmed by the appearance of two separate peaks, each corresponding to the first and second positive electrode active material particles, in the volume cumulative particle size distribution curve of the positive electrode active material of one embodiment.

As a result of experiments by the present inventors, it has been found that by using the positive electrode active material of one embodiment having the bimodal particle size distribution, the cracking of positive electrode active material particles, particularly the cracking of particles during rolling, may be suppressed. This is predicted to be because the use of the positive electrode active material having the bimodal particle size distribution may effectively buffer the stress applied to the particles during rolling or the like.

Additionally, by applying a positive electrode active material having the bimodal particle size distribution, the contact area with the electrolyte in the positive electrode may be improved, and rate characteristics may be enhanced by itself. Therefore, while resolving the low rate characteristics that are a problem with conventional lithium-rich manganese-rich oxides, the BET specific surface area of each positive electrode active material particle may be kept small. Therefore, it is possible to further reduce the cracking of the positive electrode active material particles.

Therefore, in the case of using the positive electrode active material of one embodiment, it is possible to fabricate an excellent positive electrode having high density, low porosity and thin thickness without any cracking of particles. Therefore, by using the positive electrode active material of one embodiment, it is possible to provide a next-generation lithium secondary battery that not only exhibits electrical and chemical characteristics such as high capacity characteristics peculiar to manganese-rich positive electrode active materials, but also has thin thickness, high density and excellent rate characteristics.

Meanwhile, in the positive electrode material of one embodiment, the lithium-rich manganese-rich oxide included in the first and second positive electrode active material particles may have a molar ratio of lithium based the number of moles of all metals excluding lithium of more than 1, or 1.1 to 1.5, or 1.3 to 1.5. In one example, this molar ratio of lithium can be calculated from the equation "a/(2-a)" in Formula 1. Further, in Formula 1, a is the molar ratio of Li in the lithium-rich manganese-rich oxide, and a in Formula 1 may satisfy 1.1≤a≤1.5, 1.1≤a≤1.4, 1.1≤a≤1.3, or 1.14≤a≤1.3.

As the range of a and the molar ratio of lithium to the remaining metals satisfy the above-described ranges, higher capacity and excellent rate characteristics can be achieved while maintaining the chemical and crystallographic stability of the first and second positive electrode active material particles. Further, if the molar ratio of lithium to the remaining metals is too high, the electrical conductivity may decrease, the formation of a rock-salt phase (Li₂MnO₃) may increase, and the degeneration rate may become faster. If the molar ratio is too low, the effect of improving the energy density may be minimal.

The b is the molar ratio of Mn in the lithium-rich manganese-rich oxide, wherein in Formula 1, it may satisfy 0.5≤b<1, 0.5≤b≤0.9, or 0.55≤b≤0.8. Therefore, the excellent capacity characteristics peculiar to lithium-rich manganese-rich oxide may be exhibited.

The c is the molar ratio of Ni in the lithium-rich manganese-rich oxide, wherein in Formula 1, c may satisfy 0≤c≤0.5, 0≤c<0.5, 0.1≤c≤0.5, 0.1≤c≤0.45, or 0.3≤c≤0.4.

The d refers to the molar ratio of element M, which is added or incorporated in the form of doping into the lithium-rich manganese-rich oxide, wherein in Formula 1, d may be 0≤d≤0.5, 0≤d<0.5, 0≤d≤0.2, or 0≤d≤0.1. If the content of the additional element M is too high, it may not only negatively affect the capacity of the active material, but also increase the oxygen-redox reaction, so that gas evolution and deterioration of the positive electrode active material become intensified, and the lifetime characteristics may deteriorate.

A more suitable example of the M element may be one or more elements selected from the group consisting of Co, Cr, V, Zn, Ti, Al, Mg, B, W, Ga, In, Ru, Nb, Sn, Sr, and Zr. In a more specific embodiment, one or more elements selected from the group consisting of Co, Zn, Ti, Al, Mg, and B may be added to the lithium-rich manganese-rich oxide in the form of doping or the like.

Further, in a specific embodiment, the lithium-rich manganese-rich oxide may contain an additional element M or the like only on the surface in the form of a doping element, and the molar ratio of nickel : manganese may be 25:75 to 50:50, or 25:75 to 45:55, or 30:70 to 40:60. Within the above range, if the molar ratio of manganese is too low, the proportion of rock-salt phase may be insufficient, which may result in insufficient capacity or decreased crystallographic and chemical stability. Conversely, if the molar ratio of manganese is too high, the stability of the lithium-rich manganese-rich oxide may also deteriorate.

Meanwhile, in one example of Formula 1, b+c+d may satisfy 1, but in other examples, it may have a value of 0.9 or more and less than 1. The b+c+d being less than 1 may indicate that Formula 1 further includes manganese, nickel, and additional element M, as well as additional metal elements. However, it goes without saying that such an additional metal element may be added within the limit that maintains the crystal structure peculiar to the lithium-rich manganese-rich oxide.

In a specific embodiment of the positive electrode active material of one embodiment, the lithium-rich manganese-rich oxide may be a compound represented by the following Formula 1a:

[Formula 1a] Liₐ[Mn_{b}Ni_{c}M_{d}]₂₋ₐO₂

wherein in Formula 1a, 1.1<a<1.3, 0.5≤b≤0.9, 0.1≤c≤0.5, 0≤d≤0.1, and M is one or more selected from the group consisting of Co, Cr, V, Zn, Ti, Al, Mg, B, W, Ga, In, Ru, Nb, Sn, Sr, and Zr.

Meanwhile, a lithium-rich manganese-rich oxide containing excessive lithium may contain a compound having a rock-salt structure such as Li₂MnO₃ and a compound having a layered structure such as Li[Ni_{w}Mn_{y}M_{z}]O₂ in a mixed state. Thus, the lithium-rich manganese-rich oxide may be represented by the following Formula 2:

[Formula 2] X*Li₂MnO₃·(1-X)*Li[Ni_{w}Mn_{y}M_{z}]O₂

wherein in Formula 2,
M is one or more selected from the group consisting of Co, Fe, Cr, V, Cu, Zn, Ti, Al, Mg, B, W, Ga, In, Ru, Nb, Sn, Sr, and Zr, 0.2≤X≤0.5, 0≤w≤0.5, 0.4≤y<1 and 0≤z≤0.2, with 0<w+z≤0.5.

The X means the ratio of rock-salt phase (Li₂MnO₃ phase) in the lithium-rich and manganese-rich oxide, and the w, y and z mean the molar ratios of Ni, Mn, and the additional element M in the layered structure compound, respectively.

Meanwhile, if necessary, a coating layer may be further included on the surface of the lithium-rich manganese-rich oxide. In this case, the coating layer may suppress contact between the lithium-rich manganese-rich oxide and the electrolyte to reduce electrolyte side reactions, thereby achieving the effect of improving the lifetime characteristics.

The coating layer may include a coating element M¹, wherein the coating element M¹, may be, for example, one or more selected from the group consisting of Al, B, Co, W, Mg, V, Ti, Zn, Ga, In, Ru, Nb, Sn, Sr, and Zr. The coating element M¹ may include two or more types, for example, Al and Co.

The coating element may exist in the coating layer in the form of an oxide, i.e., M¹O_{z} (1≤z≤4).

The coating layer may be formed by methods such as dry coating, wet coating, chemical vapor deposition (CVD), physical vapor deposition (PVD), or atomic layer deposition (ALD). Among these, it is preferable to form the coating layer by atomic layer deposition, in that the coating layer area can be formed widely.

The formation area of the coating layer may be 10% to 100%, 30% to 100%, or 50% to 100% of the total surface area of the first and/or second positive electrode active material particles containing the lithium-rich manganese-rich oxide. When the coating layer area satisfies the above range, the effect of improving lifetime characteristics is excellent.

Meanwhile, in the positive electrode active material of one embodiment, the first and second positive electrode active material particles may include lithium-rich manganese-rich oxides having the same or different compositions from each other. More specifically, they may be represented by the same or different formulas from each other within the scope of Formula 1 or 2 described above.

Further, the first positive electrode active material particles may have an average particle size (D50) of, for example, 7 to 20 µm, 8 to 15 µm, or 8.5 to 11 µm, and the second positive electrode active material particles may have a smaller average particle size (D50), for example, 1 to 6 µm, 2 to 5 µm, or 2.5 to 4.5 µm.

Thereby, it is possible to effectively alleviates stress applied during processes such as rolling, thereby further reducing the cracking of the positive electrode active material particles and enabling provision of a positive electrode with higher density and lower porosity.

Further, in a specific embodiment of the disclosure, the first positive electrode active material particles and the second positive electrode active material particles may be included in the positive electrode active material at a weight ratio of 50:50 to 95:5, or 55:45 to 95:5, or 60:40 to 90:10, or 65:35 to 70:30. Thereby, it is possible to provide positive electrode with higher density and lower porosity while maintaining the electrical and chemical characteristics peculiar to lithium-rich manganese-rich oxide.

Meanwhile, if the average particle size (D50) of the first positive electrode active material particles is too large, or the average particle sizes (D50) of the second positive electrode active material particles is too small, the electrical, chemical or mechanical characteristics of the positive electrode active material of one embodiment may be deteriorated.

Conversely, if the average particle size (D50) of the first positive electrode active material particles is too small, or the average particle size (D50) of the second positive electrode active material particles is too large, the bimodal particle size distribution characteristic peculiar to the positive electrode active material of one embodiment may not be properly achieved, the cracking of particles may occur during the rolling process, or the density of the positive electrode may be insufficient.

On the other hand, the positive electrode active material of one embodiment may have a BET specific surface area of 0.1 m²/g to 5.0 m²/g, specifically 0.5 m²/g to 3.0 m²/g, and more specifically 1.0 m²/g to 2.0 m²/g as a whole in a state including the first and second positive electrode active material particles.

Additionally, the BET specific surface area of the first positive electrode active material particles contained in the positive electrode active material may be 1.2 m²/g or more, preferably 1.3 m²/g or more. In this case, it is preferable in that it can achieve high capacity and efficiency. However, taking into consideration issues such as electrode processability, large surface area, and surface side reactions and increased non-uniformity due to low sphericity, the BET specific surface area may be 4.0 m²/g or less, or 3.0 m²/g or less, or 2.0 m²/g or less. Further, the BET specific surface area of the second positive electrode active material particles may be smaller than that of the first positive electrode active material particles, and specifically, it may be 0.3 m²/g to 1.7 m²/g, or 1.0 m²/g to 1.5 m²/g.

The positive electrode active material of one embodiment includes first and second positive electrode active materials and thus has a bimodal particle size distribution, whereby it may secure a reaction area with an electrolyte by itself, and may excellently secure capacity and rate characteristics. As a result, the positive electrode active material may have the above-described low specific surface area, and the cracking of particles due to rolling may be further reduced. Further, as each specific surface area is optimized within the above-described range, the solid content of the slurry for forming the positive electrode active material layer may be optimized, and the amount of gas evolution may be further reduced. However, if the BET specific surface area is too low, the reaction area with the electrolyte is insufficient, thus making it difficult to achieve sufficient capacity, and if the specific surface area is too high, moisture absorption is rapid and side reactions with the electrolyte are accelerated, thus making it difficult to secure lifetime characteristics.

The positive electrode active material of the above-described embodiments, specifically, the first and second positive electrode active material particles, can be prepared in accordance with a general preparation method of lithium-rich manganese-rich oxide. For example, each of the first and second positive electrode active material particles can be prepared by mixing a transition metal precursor containing manganese and a lithium raw material to form a mixture and then sintering the mixture. The types and preparation conditions of the precursor and the raw materials can follow the general preparation conditions for manganese-rich positive electrode active materials, and further descriptions thereof will thus be omitted.

However, in such a preparation process, the first and second positive electrode active material particles satisfying the above-described average particle size (D50) can be prepared by adjusting the type or particle size of the transition metal precursor, or by adjusting the sintering temperature, and the like, and these particles can be mixed at a prescribed ratio to obtain the positive electrode active material of one embodiment. However, the process conditions for preparing the positive electrode active material to achieve a prescribed average particle size (D50) are well known to those skilled in the art, and further descriptions thereof will thus be omitted.

Meanwhile, the positive electrode active material of the above-described embodiments is mixed with a binder, a conductive material, a solvent, and the like to form a positive electrode slurry, and the positive electrode slurry is then coated onto a positive electrode current collector, dried, and rolled to fabricate a positive electrode. The positive electrode slurry is described below.

First, the positive electrode active material of the above-described embodiments may be included in an amount of 90% by weight to 99% by weight, 95% by weight to 99% by weight, or 97% by weight to 98% by weight, based on the total weight of the solids (e.g., positive electrode active material, conductive material, and binder) in the positive electrode slurry. If the content of the positive electrode active material in the solids is 90% by weight or less, the energy density may become low, and the capacity may be reduced.

Furthermore, the binder may be one or more selected from the group consisting of polyvinylidene fluoride (PVDF), polyvinylidene fluoride-co-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrene-butadiene rubber (SBR), a fluorine rubber, or various copolymers thereof. Preferably, the binder may be polyvinylidene fluoride (PVDF).

The binder may be included in an amount of 0.5% by weight to 2.5% by weight, or 1 % by weight to 2% by weight, or 1.5% by weight to 2% by weight, based on the total weight of the solids in the positive electrode slurry. When the content of the binder is within the above range, sufficient adhesion to the current collector and bonding between particles are ensured, so that the initial resistance may be kept low while improving the durability of the positive electrode.

The conductive material may be one or more selected from the group consisting of graphite such as natural graphite or artificial graphite; carbon blacks such as acetylene black, Ketjen black, channel black, furnace black, lamp black, and thermal black; metal powder or metal fiber such as copper, nickel, aluminum, and silver; conductive whiskers such as zinc oxide whiskers and potassium titanate whiskers; conductive metal oxides such as titanium oxide; or conductive polymers such as polyphenylene derivatives. Preferably, the conductive material may be carbon nanotubes or carbon black, most preferably carbon nanotubes.

The conductive material may be included in an amount of 0.1% by weight to 2.5% by weight, 0.3% by weight to 2% by weight, or 0.5% by weight to 1% by weight, based on the total weight of the solids in the positive electrode slurry. When the content of the conductive material is within the above range, it is preferred in that it may reduce dead volume while maintaining conductivity between the active materials.

In addition, the positive electrode slurry may optionally further include a dispersant, wherein the dispersant may be hydrogenated nitrile butadiene rubber (HNBR).

Meanwhile, the solvent for the positive electrode slurry may be any solvent commonly used in the art, and for example, N-methylpyrrolidone (NMP), dimethyl sulfoxide (DMSO), isopropyl alcohol, dimethyl formamide (DMF), acetone, water, or a mixture of two or more thereof may be used. The solvent may be adjusted and used in an amount sufficient to achieve the viscosity of the above-described positive electrode slurry.

On the other hand, according to another embodiment of the present disclosure, a positive electrode comprising the above-described positive electrode active material is provided. Such a positive electrode may be fabricated from the positive electrode slurry, and may include, for example, a positive electrode current collector; and a positive electrode active material layer formed on the positive electrode current collector and including the positive electrode active material of one embodiment. In this case, the positive electrode active material layer is formed by processes such as coating, drying, and rolling of the above-described slurry, and may further include a binder and a conductive material.

The positive electrode current collector may contain a metal with high conductivity, and the positive electrode active material layer is easily adhered, but is not particularly limited as long as it has no reactivity within the voltage range of the battery. As the positive electrode current collector, for example, stainless steel, aluminum, nickel, titanium, sintered carbon, or aluminum or stainless steel of which surface is treated with carbon, nickel, titanium, silver, or the like may be used. The positive electrode current collector may generally have a thickness of 3µm to 500 µm, and the positive electrode current collector may have fine protrusions and depressions formed on a surface thereof to enhance adherence of a positive electrode active material. For example, the positive electrode current collector may be used in various forms such as a film, a sheet, a foil, a net, a porous body, a foam body, and a non-woven fabric body.

The positive electrode can be fabricated in accordance with to a conventional positive electrode fabrication method except for using the above-described positive electrode material. Specifically, the positive electrode may be fabricated by applying the positive electrode slurry on a positive electrode current collector, followed by drying and rolling, or alternatively, may be fabricated by casting the positive electrode slurry on a separate support and then laminating the film obtained by peeling from this support onto the positive electrode current collector.

In this case, the application and drying processes of the positive electrode slurry may be carried out by a conventional method, taking into consideration the solvent and solid content contained therein. The rolling process may be carried out, for example, by a tandem rolling method, in which continuous rolling is performed two or more times, or 2 to 4 times, or 2 to 3 times. In this case, during the first rolling, it is possible to achieve up to 60% to 90%, or 70% to 90% for the reduction of the target thickness, and during the second rolling, it is possible to achieve up to 70% to 100%, or 80% to 100% for the reduction of the target thickness. Further, if rolling is carried out three or more times, the process may be carried out so as to achieve 100% for the reduction of the target thickness during the final rolling.

In more specific examples, to prevent electrode breakage or the like during the rolling, the pressure applied during the rolling may be 1.0 ton/cm to 2.0 ton/cm, and a uniform pressure can be applied throughout the process.

On the other hand, according to yet another embodiment of the present disclosure, a lithium secondary battery comprising the positive electrode of the other embodiments described above is provided. Such a lithium secondary battery may include, for example, the above-described positive electrode, a negative electrode facing the positive electrode, and a separator interposed between the positive electrode and the negative electrode or an electrolyte layer, and optionally, an electrolyte. In this case, since the positive electrode is the same as the contents described above, a detailed description thereof will be omitted, and only the remaining components will be described in detail below.

In the lithium secondary battery, the negative electrode includes a negative electrode current collector and a negative electrode active material layer located on the negative electrode current collector.

The negative electrode current collector is not particularly limited as long as it has high conductivity without causing any chemical change in the battery, and for example, copper, stainless steel, aluminum, nickel, titanium, sintered carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode current collector, microscopic irregularities may be formed on the surface of the current collector to improve the adhesion of the negative electrode active material. The negative electrode current collector, for example, may be used in various shapes such as a film, a sheet, a foil, a net, a porous body, a foam body, and a non-woven fabric body.

The negative electrode active material layer optionally includes a binder and a conductive material in addition to the negative electrode active material.

A compound capable of reversible intercalation and deintercalation of lithium may be used as the negative electrode active material. Specific examples of the negative electrode active material may be a carbonaceous material such as artificial graphite, natural graphite, graphitized carbon fibers, and amorphous carbon; a (semi)metal-based material alloyable with lithium such as Si, Al, Sn, Pb, Zn, Bi, In, Mg, Ga, Cd, a Si alloy, a Sn alloy, or an Al alloy; a (semi)metal oxide which may be doped and undoped with lithium such as SiO_{β} (0<β<2), SnO₂, vanadium oxide, and lithium vanadium oxide; or a composite including the (semi)metal-based material and the carbonaceous material such as a Si-C composite or a Sn-C composite, and any one thereof or a mixture of two or more thereof may be used. Additionally, a metallic lithium thin film may be used as the negative electrode active material. The negative electrode active material may be included in an amount of 80% by weight to 99% by weight based on the total weight of the negative electrode active material layer.

The binder is a component that assists in the bonding between the conductive material, the active material and the current collector. Typically, the binder may be added in an amount of 0.1% by weight to 10% by weight based on the total weight of the negative electrode active material layer. Examples of the binder may include polyvinylidene fluoride (PVDF), polyvinyl alcohol, carboxymethylcellulose(CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrene-butadiene rubber, a fluorine rubber, or various copolymers thereof.

The conductive material is a component for further improving the conductivity of the negative electrode active material. The conductive material may be added in an amount of 10% by weight or less, preferably 5% by weight or less, based on the total weight of the negative electrode active material layer. Such a conductive material is not particularly limited as long as it has conductivity without causing any chemical change in the battery, and, for example, graphite such as natural graphite or artificial graphite; carbon black such as acetylene black, Ketjen black, channel black, furnace black, lamp black, or thermal black; conductive fibers such as carbon fibers or metal fibers; carbon fluoride; metal powders such as aluminum and nickel powders; conductive whiskers such as zinc oxide whiskers and potassium titanate whiskers; conductive metal oxide such as titanium oxide; a conductive material such as polyphenylene derivatives, and the like may be used.

The negative electrode active material layer may be prepared by coating, on a negative electrode current collector, a negative electrode slurry, which is prepared by dissolving or dispersing a negative electrode active material and optionally a binder and a conductive material in a solvent, and then drying the coated current collector, or by casting the negative electrode slurry on a separate support and then laminating a film obtained peeling from the support onto the negative electrode current collector.

On the other hand, in the lithium secondary battery, a separator is to separate the negative electrode and the positive electrode and to provide a movement path for lithium ions. Any separator may be used without particular limitation as long as it is typically used as a separator in a lithium secondary battery. In particular, a separator having high moisture-retention ability for an electrolyte as well as low resistance to the movement of electrolyte ions is preferable. Specifically, a porous polymer film, for example, a porous polymer film produced using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Also, a coated separator including a ceramic component or a polymer material may be used to secure heat resistance or mechanical strength, and may be selectively used in a single-layered or a multi-layered structure.

Meanwhile, the lithium secondary battery may include the separator, but may also include an electrolyte layer separately from the separator, or may include a stack in which the electrolyte layer is stacked on the separator. In specific examples, the electrolyte layer may be a gel electrolyte layer including a gel electrolyte, or a solid electrolyte layer.

In a more specific example, the electrolyte layer including the gel electrolyte includes a matrix containing, for example, a polyurethane-based or polyacrylic-based crosslinked polymer, a lithium salt, and a non-aqueous organic solvent, and may have a form in which the lithium salt and the non-aqueous organic solvent are dispersed or encapsulated in the matrix. However, the types of crosslinked polymers, lithium salts, and organic solvents that may be included in the gel electrolyte are readily obvious to those skilled in the art, and further descriptions thereof will thus be omitted.

Additionally, in another specific example, the solid electrolyte layer may include any solid electrolyte, for example. one or more selected from the group consisting of a polymer-based solid electrolyte, an oxide-based solid electrolyte, a sulfide-based solid electrolyte, and a halogenated solid electrolyte. However, the composition and the like of such a solid electrolyte layer can follow those of conventional solid electrolyte layers which had been known, and further descriptions thereof will thus be omitted.

On the other hand, the above-described lithium secondary battery may further include an electrolyte containing a lithium salt and a non-aqueous organic solvent.

The non-aqueous organic solvent may be used without particular limitation as long as it can serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate(DMC), diethyl carbonate(DEC), ethylmethyl carbonate(EMC), ethylene carbonate(EC), and propylene carbonate (PC); an alcohol-based solvent such as ethyl alcohol and isopropyl alcohol; nitriles such as R-CN (where R is a linear, branched, or cyclic hydrocarbon group having 2 to 20 carbon atoms, and may include a double-bond, an aromatic ring or ether bond); amides such as dimethylformamide; dioxolanes such as 1,3-dioxolane; sulfolane, or the like can be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity which may increase charging/discharging performance of the battery (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, the anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻. As the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄) or the like can be used. The lithium salt may be used in a concentration range of 0.1M to 2.0M. In a case in which the concentration of the lithium salt is included within the above range, since the electrolyte may have appropriate conductivity and viscosity, the electrolyte may exhibit excellent performance and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexamethylphosphate triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components. In this case, the additive may be included in an amount of 0.1 to 5% by weight based on a total weight of the electrolyte.

Since the above-described lithium secondary battery stably exhibits excellent discharge capacity, output characteristics, and lifetime characteristics, the lithium secondary battery is suitable for portable devices, such as mobile phones, notebook computers, and digital cameras, and electric cars such as hybrid electric vehicles (HEVs).

The type of the lithium secondary battery may be, but is not particularly limited to, a cylindrical type using a can, a prismatic type, a pouch type, a coin type, or the like.

The lithium secondary battery according to the present invention may be used not only in a battery cell used as a power source of a small device but also as a unit battery in medium-to-large-sized battery modules including a plurality of battery cells.

Examples of the medium-to-large-sized device include, but are not limited to, an electric vehicle, a hybrid electric vehicle, a plug-in hybrid electric vehicle, a power storage system, and the like.

Hereinafter, the present disclosure will be described in detail with reference to examples.

### <Example - Preparation of Positive electrode Materials>

The positive electrode active materials A to D used in the following Examples, and Comparative Examples each have the characteristics shown in Table 1 below.

**[Table 1]**

| | Compositional formula | D50 (*µ*m) | Particle form | BET specific surface area (m²/g) |
|---|---|---|---|---|
| Positive electrode active material A | Li_{1.36}[Mn_{0.65}Ni_{0.35}]O₂ | 9.46 | Secondary particle | 1.56 |
| Positive electrode active material B | Li_{1.36}[Mn_{0.65}Ni_{0.35}]O₂ | 9.50 | Secondary particle | 1.53 |
| Positive electrode active material C | Li_{1.36}[Mn_{0.65}Ni_{0.35}]O₂ | 3.77 | Secondary particle | 1.28 |
| Positive electrode active material D | Li_{1.36}[Mn_{0.65}Ni_{0.35}]O₂ | 3.76 | Secondary particle | 1.39 |

### Example 1.

The positive electrode active material A and the positive electrode active material C were mixed in a weight ratio of 65:35 to prepare a positive electrode material. It was confirmed that the overall BET specific surface area of this positive electrode material is approximately 1.46 m²/g.

### Example 2.

The positive electrode active material B and the positive electrode active material D were mixed in a weight ratio of 50:50 to prepare a positive electrode material. It was confirmed that the overall BET specific surface area of this positive electrode material is approximately 1.46 m²/g.

### Comparative Example 1.

As the positive electrode material, only the positive electrode active material A was used alone .

### Comparative Example 2.

The positive electrode active material A and the positive electrode active material B were mixed in a weight ratio of 65:35 to prepare a positive electrode material. It was confirmed that the overall BET specific surface area of this positive electrode material is approximately 1.55 m²/g.

### Preparation Example: Fabrication of Positive Electrode and Lithium Secondary Battery

The positive electrode material of Example or Comparative Example : carbon nanotubes : PVDF binder : HNBR-containing dispersant were mixed in a weight ratio of 97.46:0.62:1.7:0.22 in N-methylpyrrolidone to prepare a positive electrode slurry. The positive electrode slurry was coated onto an aluminum current collector sheet, dried, and then rolled at a pressure of about 1.5 tons/cm² to thereby fabricate a positive electrode.

Graphite negative electrode active material: single-walled carbon nanotubes: styrene-butadiene rubber (SBR): carboxymethyl cellulose (CMC) were mixed in water in a weight ratio of 96.2:0.8:2:1 to prepare a negative electrode slurry. The negative electrode slurry was coated onto a copper current collector sheet, dried, and then rolled to thereby fabricate a negative electrode.

On the other hand, the positive electrode and the negative electrode were fabricated by adjusting the loading amount so that the ratio of the negative electrode discharge capacity to the positive electrode discharge capacity (N/P ratio) was 115%.

A polyethylene separator was interposed between the positive electrode and the negative electrode fabricated as above to prepare an electrode assembly. The electrode assembly was inserted into a battery case, an electrolyte was injected thereto, and the activation process was performed by charging up to 4.6 V at a constant current of 0.1 C at 45°C and then discharging up to 2.0 V at a constant current of 0.1 C to thereby fabricate a lithium secondary battery.

### Experimental Example 1: Analysis of Volume Cumulative Particle Size Distribution and Average particle size (D50) of Positive Electrode Active Material

First, the volume cumulative particle size distribution (PSD) of the positive electrode powders included in Examples and Comparative Examples was determined using Microtrac S-3500 size analyzer. This volume cumulative particle size distribution curve is shown in FIG. 1. From this volume cumulative particle size distribution curve, it was confirmed that the positive electrode material of Examples 1 and 2 had a bimodal particle size distribution. Furthermore, the average particle size (D50) of each positive electrode active material included in the positive electrode material was analyzed from the volume cumulative particle size distribution curve, and the analysis results are the same as shown in Table 1 above.

Additionally, the PSD of the entire positive electrode material included in each positive electrode slurry prepared in Preparation Example was analyzed in the same manner, and this was derived as the data before rolling. From this, the volume ratio of particles with a particle size of 1 µm or less and the volume ratio of the larger particle (e.g., positive electrode active material A or B) in the positive electrode material included in the positive electrode slurry were evaluated, respectively.

### Experimental Example 2: Evaluation of Volume Cumulative Particle Size Distribution and Particle Crack Rate of Positive Electrode

The positive electrodes fabricated in Preparation Example by using the positive electrode materials of Examples or Comparative Examples were heat-treated in a furnace at 700°C for 10 hours to recover a positive electrode material. The positive electrode material was finely crushed using a mortar and pestle, and then classified using a 250-mesh sieve to obtain a positive electrode powder contained in each positive electrode. The resulting powder was analyzed using Microtrac S-3500 to obtain a volume cumulative particle size distribution (PSD).

From this, the volume ratio of particles having a particle size of 1 µm or less and the volume ratio of a large particle (e.g., positive electrode active material A or B) among the positive electrode material contained in the positive electrode were evaluated. After this rolling, the volume ratio of particles having a particle size of 1 µm or less and the volume ratio of the large particles contained in the positive electrode are shown in Table 2 below.

When compared to the data obtained in Experimental Example 1, the extent to which the volume ratio of particles with a particle size of 1 µm or less and the volume ratio of the large particles changed in the positive electrode fabricated through rolling was evaluated and shown in Table 2 below.

**[Table 2]**

| Category | | Example 1 | Example 2 | Comparative Example 2 |
|---|---|---|---|---|
| Evaluation of particle crack rate | Volume ratio of particles (fine powder) with 1 µm or less (positive electrode after rolling; %) | 8.4 | 13.0 | 7.2 |
| | Change in the volume ratio of fine powder before/after rolling (%) | 0 | 4.6% increase | 1.2% decrease |
| | Volume ratio of large particles (positive electrode after rolling ; %) | 18.6 | 23.9 | 28.5 |
| | Change in the volume ratio of large particles before/after rolling (%) | 0 | 5.3% decrease | 9.9% decrease |

Referring to Table 2, it was confirmed that when the positive electrode material of Example 1 was used, even if the positive electrode was fabricated through rolling, there was no substantial change in the volume ratio of particles having a particle size of 1 µm or less and the volume ratio of the larger particles. From this, it can be confirmed that the cracking of particles may be suppressed during the positive electrode fabrication process through rolling.

When the positive electrode material of Example 2 was used, it was confirmed that the cracking of particles occurred more than in Example 1, however, it was confirmed that when compared to Comparative Example 2 containing only a positive electrode active material of large particles, the change in the volume ratio of large particles before and after rolling was small, and thus the cracking of particles could be relatively suppressed.

### Experimental Example 3: Evaluation of Amount of Gas Evolution

For the lithium secondary batteries fabricated in Preparation Example by using the positive electrode materials of Examples or Comparative Examples, the gas evolved during additional 100 charge-discharge cycles (charge-discharge cycles performed at 2.0 to 4.6 V and 45°C) was captured and quantitatively analyzed using GC-FID/TCD. The results of the analysis of the amount of active gas evolution were compared and shown in Table 3 below.

**[Table 3]**

| | Amount of gas evolution (µl) | | | | | | |
|---|---|---|---|---|---|---|---|
| | Total | H₂ | CO | CO₂ | CH₄ | C₂H₄ | C₂H₆ |
| Example 1 | 474 | 67 | 104 | 69 | 15 | 212 | 7 |
| Example 2 | 476 | 64 | 102 | 103 | 15 | 185 | 7 |
| Comparative Example 1 | 499 | 64 | 117 | 130 | 14 | 168 | 6 |

Referring to Table 3, it was confirmed that the lithium secondary batteries fabricated using the positive electrode materials of Examples 1 and 2 exhibited reduced amount of gas evolution compared to Comparative Example 1.

### Experimental Example 4: Evaluation of Lifetime Characteristics

The lithium secondary batteries fabricated in Preparation Example by using the positive electrode materials of Examples or Comparative Examples were subjected to 100-cycle charge/discharge tests under 25°C and voltages of 2.5 to 4.35 V. While performing such charge-discharge cycles, the energy retentions and capacity retentions were evaluated, and the results are shown in Table 4 below.

**[Table 4]**

| @100 cycle | Example 1 | Example 2 | Comparative Example 2 |
|---|---|---|---|
| Average voltage(V) | 3.482 | 3.489 | 3.488 |
| Energy retention (%) | 90.18 | 91.36 | 89.71 |
| Capacity retention (%) | 92.06 | 93.46 | 91.43 |

Referring to Table 4, it was confirmed that the lithium secondary batteries including the positive electrode materials of Examples exhibited higher energy retention and capacity retention and improved lifetime characteristics after 100 to 150-cycle charge/discharge tests compared to Comparative Examples.

## Claims

1. A positive electrode active material for a lithium secondary battery,
the positive electrode active material comprising: a lithium-rich manganese-rich oxide which includes a layered crystal structure and in which a molar ratio of lithium based on the number of moles of all metals excluding lithium is more than 1 and the content of manganese in all metals excluding lithium is 50 mol% or more,
wherein the positive electrode active material comprises a first positive electrode active material particle and a second positive electrode active material particle each having a different average particle size (D50) and including the lithium-rich manganese-rich oxide, and
wherein when the positive electrode active material is subjected to volume cumulative particle size distribution analysis, it has a bimodal particle size distribution.

2. The positive electrode active material for a lithium secondary battery according to claim 1, wherein the lithium-rich manganese-rich oxide is represented by the following Formula 1:
[Formula 1] Liₐ[Mn_{b}Ni_{c}M_{d}]₂₋ₐO₂
wherein in Formula 1, a is more than 1, b is 0.5 or more and less than 1, c and d are each 0 or more and 0.5 or less, with 0<c+d≤0.5, and M is one or more selected from the group consisting of Co, Fe, Cr, V, Cu, Zn, Ti, Al, Mg, B, W, Ga, In, Ru, Nb, Sn, Sr, and Zr.

3. The positive electrode active material for a lithium secondary battery according to claim 1, wherein the lithium-rich manganese-rich oxide has a molar ratio of lithium based on the number of moles of all metals excluding lithium of 1.3 to 1.5.

4. The positive electrode active material for a lithium secondary battery according to claim 1, wherein a molar ratio of nickel : manganese contained in the lithium-rich manganese-rich oxide is 25:75 to 50:50.

5. The positive electrode active material for a lithium secondary battery according to claim 1, wherein the lithium-rich manganese-rich oxide is represented by the following Formula 1a:
[Formula 1a] Liₐ[Mn_{b}Ni_{c}M_{d}]₂₋ₐO₂
wherein in Formula 1a, 1.1<a<1.3, 0.5≤b≤0.9, 0.1≤c≤0.5, 0≤d≤0.1, and M is one or more selected from the group consisting of Co, Cr, V, Zn, Ti, Al, Mg, B, W, Ga, In, Ru, Nb, Sn, Sr, and Zr.

6. The positive electrode active material for a lithium secondary battery according to claim 1, wherein the lithium-rich manganese-rich oxide comprises a rock-salt structure compound and a layered structure compound in a mixed state.

7. The positive electrode active material for a lithium secondary battery according to claim 6, wherein the lithium-rich manganese-rich oxide is represented by the following Formula 2:
[Formula 2] X*Li₂MnO₃·(1-X)*Li[Ni_{w}Mn_{y}M_{z}]O₂
wherein in Formula 2,
M is one or more selected from the group consisting of Co, Fe, Cr, V, Cu, Zn, Ti, Al, Mg, B, W, Ga, In, Ru, Nb, Sn, Sr, and Zr, 0.2≤X≤0.5, 0≤w≤0.5, 0.4≤y<1 and 0≤z≤0.2, with 0<w+z≤0.5.

8. The positive electrode active material for a lithium secondary battery according to claim 1, wherein the first positive electrode active material particles have an average particle size (D50) of 7 to 20 µm, and the second positive electrode active material particles have an average particle size (D50) smaller than the first positive electrode active material particles.

9. The positive electrode active material for a lithium secondary battery according to claim 8, wherein the second positive electrode active material particles have an average particle size (D50) of 1 to 6 µm.

10. The positive electrode active material for a lithium secondary battery according to claim 1, wherein the first and second positive electrode active material particles have a form of secondary particles in which a plurality of primary particles are aggregated.

11. The positive electrode active material for a lithium secondary battery according to claim 1, wherein the first positive electrode active material particles : the second positive electrode active material particles are contained in a weight ratio of 50:50 to 95:5.

12. The positive electrode active material for a lithium secondary battery according to claim 1, wherein the first positive electrode active material particles have a BET specific surface area of 1.2 m²/g to 4.0 m²/g.

13. The positive electrode active material for a lithium secondary battery according to claim 12, wherein the second positive electrode active material particles have a BET specific surface area smaller than the first positive electrode active material particles.

14. The positive electrode active material for a lithium secondary battery according to claim 1, wherein the second positive electrode active material particles have a BET specific surface area of 0.3 m²/g to 1.7 m²/g.

15. The positive electrode active material for a lithium secondary battery according to claim 1, wherein the positive electrode active material including the first and second positive electrode active material particles has a BET specific surface area of 0.1 m²/g to 5.0 m²/g as a whole.

16. A positive electrode for a lithium secondary battery, comprising:
a positive electrode current collector; and
a positive electrode active material layer formed on the positive electrode current collector and including the positive electrode active material as set forth in any one of claims 1 to 15.

17. The positive electrode for a lithium secondary battery according to claim 16, wherein the positive electrode active material layer further comprises a binder and a conductive material.

18. A lithium secondary battery comprising:
the positive electrode as set forth in claim 16;
a negative electrode facing the positive electrode; and
a separator interposed between the positive electrode and the negative electrode or an electrolyte layer.

19. The lithium secondary battery according to claim 18 further comprising an electrolyte including a lithium salt and a non-aqueous organic solvent.
